# EUROPÄISCHE PATENTSCHRIFT

(11) **EP 1 762 361 B1**
(45) Veröffentlichungstag und Bekanntmachung des Hinweises auf die Patenterteilung: **18.03.2009**
(21) Anmeldenummer: 06017507.2
(22) Anmeldetag: 23.08.2006
(51) Int. Cl.: B29C 45/28, B29C 45/82

(54) **Pneumatische Betätigungseinrichtung für die Steuerung des Anschnitts von Nadelverschlußdüsen in einer Spritzgießanlage**
Pneumatic actuation device for controlling the gate of needle valve nozzles in an injection molding apparatus
Dispositif d'actionnement pneumatique pour contrôler une entrée d'injection des buses à obturateur à aiguille dans un apareill de moulage par injection

(30) Priorität: 09.09.2005 DE 102005042850
(43) Veröffentlichungstag der Anmeldung: 14.03.2007
(73) Patentinhaber: INCOE INTERNATIONAL, INC., 63322 Rödermark (DE)
(72) Erfinder: Goinski, Michael, Dipl. Ing., 63110 Rodgau (DE)
(74) Vertreter: Boecker, Joachim

(56) Entgegenhaltungen:
- EP-A1- 0 635 350
- EP-A2- 0 407 683
- DE-A1- 19 857 735
- DE-U1- 7 739 899
- JP-A- 2 169 227
- SCHURER J: "UMWELTGERECHTE KONDENSATENTSORGUNG. ÖDAS OEL-WASSER-PROBLEM BEI DER DRUCKLUFTERZEUGUNG" TECHNISCHE RUNDSCHAU, EDITION COLIBRI AG., WABERN, CH, Bd. 83, Nr. 50, 13. Dezember 1991 (1991-12-13), Seiten 46-49, XP000241951 ISSN: 1023-0823

## Beschreibung

Die vorliegende Erfindung bezieht sich auf eine pneumatische Betätigungseinrichtung für die Steuerung des Anschnitts von Nadelverschlußdüsen in einer Spritzgießanlage gemäß dem Oberbegriff des Anspruches 1.

Beim Spritzgießen wird in der Regel heiße Schmelze von einer Spritzgießmaschine, entweder direkt oder über ein Kanalverteilersystem, durch eine Spritzdüse in das Werkzeug (Spritzform) gespritzt. Der Bereich der Spritzdüse, mit welchem diese an das Werkzeug und an das Kunststoffteil anschließt, wird als "Anschnitt" bezeichnet. Mit diesem Anschnittbereich steckt der werkzeugseitige Teil der Spritzdüse in einer Ausnehmung des Werkzeugs, wobei der vorderen Anschnittteil der Spritzdüse mittels Präzisionsdichtung im Werkzeug fixiert ist. Mit dem vom Werkzeug abgewandten Ende stützt sich die Spritzdüse axial am Kanalverteilerblock ab.

Zum sicheren und sauberen, das heißt ohne Überstand, Verschließen des Anschnitts sind sogenannte Nadelverschlußdüsen bekannt. Bei ihnen wird der Anschnitt durch eine als Metallstift ausgebildete Nadel geöffnet und verschlossen, wobei der Antrieb der Nadel pneumatisch, hydraulisch oder elektrisch erfolgen kann. Bei pneumatischen und hydraulischen Steuerungen erfolgt die Betätigung der Nadel mit Hilfe einer Kolben-Zylinder-Vorrichtung, an deren Kolben das hintere, also das dem Werkzeug abgewandte Ende des Metallstiftes befestigt ist.

Im Falle eines pneumatischen Antriebs wird die benötigte Druckluft in der Regel von einer zentralen Druckluftversorgung der Betriebsananlage geliefert (DE 43 24 275 C2). Diese Druckluft muß zur Vermeidung von Verschmutzungen und Korrosion gefiltert und entwässert werden und zur Schmierung von Zylindern und Umkehrventilen leicht geölt werden. Bei der Betätigung des Kolbens wird die Zylinderkammer auf einer Seite des Kolbens mit Druckluft beaufschlagt. Die Luft in der gegenüberliegenden Kammer wird an die Umgebung (Produktionsstätte) abgegeben, um einen Druckaufbau in dieser Kammer zu vermeiden.

Bei der Fertigung beispielsweise medizintechnischer Produkte kann die genannte pneumatische Betätigung von Nadelverschlussdüsen wegen der Gefahr einer Kontaminierung des Reinraumes, in welchem die Produktion stattfindet, durch die aus dem Zylinder entweichende Luft häufig nicht angewendet werden.

Zur Lösung des vorgenannten Problems ist es aus der DE 198 57 735 A1 bereits bekannt, auf die herkömmliche Kolben-zylinder-Vorrichtung zu verzichten und einen rotierenden Antrieb für die Nadel zu verwenden, wobei eine drehbar, aber achsial nicht verschiebare Antriebsmutter die Spindel in Längsrichtung der Düse verschiebt.

Der vorliegenden Erfindung liegt die Aufgabe zugrunde, eine pneumatische Betätigungseinrichtung der vorgenannten Art zu entwickeln, deren Einsatz auch in Reinräumen unbedenklich ist, deren Aufbau einfach ist und deren Betrieb kostengünstig ist.

Zur Lösung dieser Aufgabe wird eine pneumatische Betätigungseinrichtung gemäß dem Oberbegriff des Anspruches 1 vorgeschlagen, welche erfindungsgemäß die im kennzeichnenden Teil des Anspruches 1 genannten Merkmale hat.

Weitere Ausgestaltungen der Erfindung sind in den Unteransprüchen genannt.

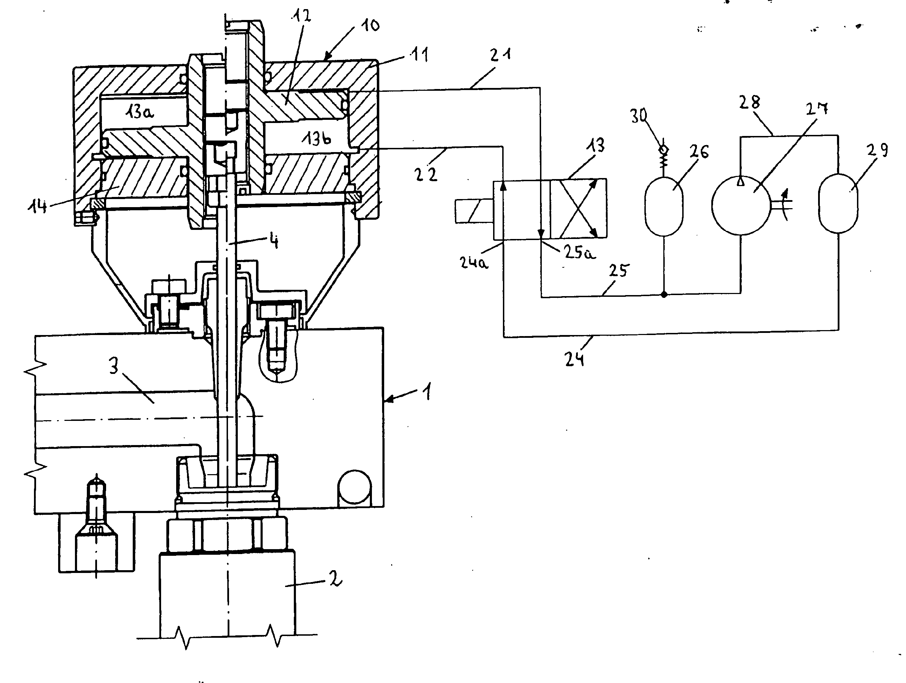

Anhand des in der einzigen Figur gezeigten Ausführungsbeispiels soll die vorliegenden Erfindung näher erläutert werden.

In der Figur bezeichnet 1 einen Teil eines Heißkanal-Verteilerblocks, und 3 bezeichnet den Schmelzekanal 3, über welchen die Schmelze von der nicht dargestellten Spritzgießmaschine der Düse 2 zugeführt wird. Auch von der Düse 2 ist nur ein Teil, und zwar der obere, an den Heißkanal-Verteilerblock 1 angrenzenden Teil dargestellt. Das Heißkanal-Verteilersystem kann weitere Düsen 2 enthalten, die an dem nicht dargestellten restlichen Teil des Heißkanal-Verteilerblocks 1 entsprechend angeschlossen sind. Die Ventilnadel 4 ist im Sinne der Zeichnung nach oben aus dem Heißkanal-Verteilerblock herausgeführt und mit ihrem oberen Ende an dem Kolben 12 einer Kolben-Zylinder-Vorrichtung 10 befestigt. Mit 11 ist der Zylinder der Kolben-Zylinder-Vorrichtung 10 bezeichnet und mit 14 der Zylinderdeckel. Die Betätigung des Nadelventils, also das Öffnen und Verschließen des Düsenanschnitts, erfolgt durch Verschiebung des Kolbens 12. Diese Verschiebung wird durch Druckluft erzwungen, die entweder der im Sinne der Zeichnung obere Zylinderkammer 13a oder der unteren Zylinderkammer 13b zugeführt wird. Die Figur zeigt links und rechts der vertikalen Mittellinie je eine Endlage des Kolbens 12. Die Eintrittsöffnungen zu den beiden Kammern 13a,13b sind über die Leitungen 21 und 22 an ein Umkehrventil 13 angeschlossen.

Die erfindungsgemäße Betätigungsvorrichtung besteht aus zwei getrennten Drucklufttanks, einem Drucktank 29 und einem Rücklauftank 26. Die Volumina beider Tanks sind sowohl aufeinander als auch an die Anzahl der zu betätigenden Nadelverschlußdüsen 2 angepaßt. Die beiden Tanks 26,29 sind über einen auf den Drucktank 29 arbeitenden Kompressor 27 miteinander verbunden. Die Austrittsseite des Drucktanks 29 ist über die Leitung 24 an die Druckluftzuführöffnung 24a des Umkehrventils 13 angeschlossen. Die Druckluftabführöffnung 25a des Umkehrventils ist über die Leitung 25 an den Rücklauftank 25 und die Eintrittsöffnung des Kompressors 27 angeschlossen. Der Rücklauftank 26 ist über ein Sicherheitsventil 30 an die Außenluft angeschlossen. Dieses Ventil 30 kann sich automatisch in Richtung zum Rücklauftank 26 öffnen, wenn in diesem ein bestimmter Unterdruck gegenüber der Umgebung auftritt.

Soll während des Betriebes der Kolben 12 in seine andere Endlage gefahren werden, so wird Druckluft aus dem Drucktank 29 über das Umschaltventil 13 in die gerade druckluftfreie Kammer (13b im linken Teil der Figur) eingeleitet, während das Druckgas aus der gerade großen Kammer 13a über die Leitung 21 und das Umkehrventil 13 zum Kompressor 27 und/oder in den Rücklauftank 26 abströmen kann. Durch den Kompressor 27 wird die Druckluft erneut verdichtet und über die Leitung 28 dem Drucktank 29 zugeführt. Durch Umstellung des Umschaltventils 13 erfolgt der Schaltvorgang des Kolben-Zylinder-Vorrichtung 10 in die entgegengesetzte Richtung.

Gemäß der Erfindung erhält man somit ein geschlossenes System, bei dem je nach Art des Umkehrventils keine oder nur eine sehr geringe Luftmenge in die Umgebung gelangt. Eine Aufbereitung der Luft wie beim Stand der Technik ist nicht mehr erforderlich, da stets die gleiche Luft in dem geschlossenen System zirkuliert. Soweit etwas Luft durch Leckdefekte aus dem System verloren geht, wird über das Ventil 30 am Rücklauftank 26 Ersatzluft aus der Umgebung angesaugt.

Es versteht sich, daß die aus den Einheiten 26, 27 und 29 bestehende Betätigungseinrichtung zur Steuerung einer Mehrzahl von Nadelverschlußdüsen, insbesondere aller Nadelverschlußdüsen, die zu der Fertigungseinheit gehören, verwendet werden kann.

Der Aufbau der Betätigungseinrichtung ist sehr einfach, da lediglich der Kompressor an die Stromversorgung anzuschließen ist und die Druckluftleitungen an die Umkehrventile anzuschließen sind. Die Gefahr einer Kontaminierung der Luft in Reinräumen ist durch die Erfindung ausgeschlossen, und sie bewirkt zugleich eine erhebliche Kosteneinsparung, und zwar auch bedingt durch den geringeren Energieverlust, da eine aufwendige Reinigung von verschmutzter Umgebungsluft nicht mehr erforderlich ist.

Statt mit Druckluft kann die Betätigungseinrichtung natürlich auch mit einem anderen Druckgas arbeiten.

## Patentansprüche

1. Pneumatische Betätigungseinrichtung für die Steuerung des Anschnitts von Nadelverschlußdüsen in einer Spritzgießanlage, wobei die Ventilnadel (4) mit ihrem der Spritzdüse (2) abgewandten Ende mit dem Kolben (12) einer Kolben-Zylinder-Vorrichtung (10) verbunden ist und die Zylinderräume (13a,13b) auf beiden Seiten des Kolbens (12) über ein gemeinsames Umkehrventil (13) an eine Druckluftquelle (29) anschließbar sind, **dadurch gekennzeichnet, daß** die an das Umkehrventil (13) angeschlossene Rücklaufleitung (25) für das Druckgas an einen Kompressor (27) angeschlossen ist, daß der Kompressor (27) mit seiner Hochdruckseite an einen Drucktank (29) angeschlossen ist und daß der Drucktank (29) an die Zulaufleitung (24) für das Umkehrventil (13) angeschlossen ist.

2. Betätigungseinrichtung nach Anspruch 1, **dadurch gekennzeichnet, daß** die an das Umkehrventil (13) angeschlossene Rücklaufleitung (25) zugleich an einen Rücklauftank (26) angeschlossen ist.

3. Betätigungseinrichtung nach Anspruch 2, **dadurch gekennzeichnet, daß** an den Rücklauftank (26) ein Sicherheits-Ansaugventil (30) angeschlossen ist.

4. Betätigungseinrichtung nach einem der vorhergehenden Ansprüche, **dadurch gekennzeichnet, daß** die Zulaufleitung (24) und die Rücklaufleitung (25) an eine der Anzahl der zu steuernden Nadelverschlußventile (2) entsprechenden Anzahl von Umkehrventilen (13) angeschlossen sind.

5. Betätigungseinrichtung nach einem der vorhergehenden Ansprüche, **dadurch gekennzeichnet, daß** die Größen des Rücklauftanks (26) und des Drucktanks (29) einander und der Anzahl der zu steuernden Nadelverschlußventile (2) angepaßt sind.

## Claims

1. Pneumatic actuating device for controlling the gate of needle valve nozzles in an injection molding apparatus, with the valve needle (4) with its end facing away from the sprue nozzle (2) being connected with the piston (12) of a piston-cylinder-device (10), and with the cylinder spaces (13a,13b) on either side of the piston (12) being connectable via a common reverse valve (13) with a compressed-air source (29), **characterized in that** the return conduit (25) for the compressed gas connected to the reverse valve (13) is connected to a compressor (27), that the compressor (27) with its high pressure side is connected to a pressure tank (29), and that the pressure tank (29) is connected to the supply conduit (24) of the reverse valve (13).

2. Actuating device according to claim 1, **characterized in that** the return conduit (25) connected to the reverse valve is at the same time connected to a return tank (26).

3. Actuating device according to claim 2, **characterized in that** a security suction-valve (30) is connected to the return tank (26).

4. Actuating device according to any of the preceding claims, **characterized in that** the supply conduit 24 and the return conduit (25) are connected to a number of reverse valves (13) corresponding to the number of the needle valve nozzles (2) to be controlled.

5. Actuating device according to any of the preceding claims, **characterized in that** the size of the revers tank (26) and of the pressure tank (29) are adjusted to each other and to the number of the needle valve nozzles (2) to be controlled.

## Revendications

1. Dispositif d'actionnement pneumatique pour la commande de l'entrée de buse à obturateur à aiguille dans une installation de moulage par injection, l'aiguille (4) de la vanne étant reliée, par son extrémité éloignée de la buse (2) d'injection, au piston (12) d'un dispositif (10) à piston-cylindre et les chambres (13a, 13b) de cylindre des deux côtés du piston (12) pouvant être raccordées à une source (29) d'air comprimé par une vanne (13) d'inversion, **caractérisé en ce que** le conduit (25) de retour du gaz comprimé, raccordé à la vanne (13) d'inversion, est raccordé à un compresseur (27), **en ce que** le compresseur (27) est raccordé par son côté haute pression, à une cuve (29) sous pression et **en ce que** la cuve (29) sous pression est raccordée au conduit (24) d'entrée pour la vanne (13) d'inversion.

2. Dispositif d'actionnement suivant la revendication 1, **caractérisé en ce que** le conduit (25) de retour, raccordé à la vanne (13) d'inversion, est raccordé en même temps à une cuve (26) de retour.

3. Dispositif d'actionnement suivant la revendication 2, **caractérisé en ce qu'**une soupape (30) d'aspiration de sûreté est raccordée à la cuve (26) de retour.

4. Dispositif d'actionnement suivant l'une des revendications précédentes, **caractérisé en ce que** le conduit (24) d'entrée et le conduit (25) de retour sont raccordés à un nombre de vannes (13) d'inversion correspondant au nombre des vannes (2) à obturateur à aiguille à commander.

5. Dispositif d'actionnement suivant l'une des revendications précédentes, **caractérisé en ce que** les dimensions de la cuve (26) de retour et de la cuve (29) sous pression sont adaptées l'une à l'autre et au nombre des vannes (2) à obturateur à aiguille à commander.
